(19) Europäisches Patentamt
European Patent Office
Office européen des brevets

(11) Publication number: **0 304 523 B1**

(12) **EUROPEAN PATENT SPECIFICATION**

(45) Date of publication of patent specification: **08.07.92**

(51) Int. Cl.⁵: **C10G 11/18**, B01J 38/32, B01J 8/38

(21) Application number: **87307633.5**

(22) Date of filing: **28.08.87**

# (54) Apparatus and method for controlling the temperature in catalyst regeneration.

(43) Date of publication of application:
**01.03.89 Bulletin 89/09**

(45) Publication of the grant of the patent:
**08.07.92 Bulletin 92/28**

(84) Designated Contracting States:
**BE DE FR GB IT NL**

(56) References cited:

| | |
|---|---|
| **EP-A- 0 105 980** | **EP-A- 0 192 906** |
| **FR-A- 2 261 497** | **GB-A- 2 032 598** |
| **US-A- 3 378 483** | **US-A- 4 578 366** |

(73) Proprietor: **EXXON RESEARCH AND ENGINEERING COMPANY**
**P.O.Box 390, 180 Park Avenue**
**Florham Park, New Jersey 07932(US)**

(72) Inventor: **Jenkinson, Ronald James**
**6 Shirley Hyrst Gower Road**
**Weybridge Surrey KT13 0HA(GB)**

(74) Representative: **Somers, Harold Arnold et al**
**ESSO Engineering (Europe) Ltd. Patents & Licences Mailpoint 72 Esso House Ermyn Way**
**Leatherhead, Surrey KT22 8XE(GB)**

EP 0 304 523 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an apparatus and method for controlling the temperature during the regeneration of fluid catalytic conversion processes. More particularly, it relates to an improved regenerator and a method of removing heat from a bed of solid catalyst particles undergoing regeneration by combustion of carbonaceous deposits on the catalyst with an oxygen-containing gas in the regenerator of a fluid catalytic cracking unit.

On most fluid catalytic cracking units, it is necessary to remove heat at a controllable rate from the regenerator when spent catalyst is regenerated by burning off carbonaceous material with an oxygen-containing gas, such as air, to maintain equilibrium cracking conditions since the exothermic heat of regeneration imparted to the catalyst is transmitted to the fresh oil feed to the cracking reactor. It is also necessary to remove heat continuously to prevent undue regeneration temperature levels tending to sinter or deactivate the catalyst by surface area reduction. When heavy hydrocarbonaceous feeds, such as atmospheric residua, vacuum residua and heavy crude oils are catalytically cracked, a greater amount of carbon deposits on the catalyst particles than in cracking of feeds, such as gas oil. When the spent catalyst from the catalytic cracking of such heavy hydrocarbon feeds is regenerated by combustion with an oxygen-containing gas in a regeneration vessel, the heat removal problem is further aggravated since more heat is released in the regenerator than that which can be utilized in the process.

Various methods have been proposed to remove heat from a regenerator. The heat removal has been accomplished by withdrawing a portion of the catalyst from the catalyst bed in the regenerator and circulating it through a tubular waste heat boiler so as to cool it before returning it to the catalyst bed. It is also known to use steam coils in the regenerator as a means of heat recovery and temperature control. See, for example, US-A-4,009,121. When a steam coil is placed in the bed of a regenerator, the heat removed by the coil cannot readily be varied or controlled. It has now been found that the heat removal in a catalyst regenerator can be controlled by utilizing an improved regenerator.

US-A-4578366 describes and claims a process for the combustion of a combustible material present on fluidized catalyst particles (e.g., hydrocarbon cracking catalyst particles) employed in a hydrocarbon conversion process which comprises the steps of:

(a) introducing a first stream of oxygen-containing combustion gas and said fluidized catalyst particles into a combustion zone maintained at a temperature sufficient for oxidation of said combustible material and therein oxidizing said combustible material to produce hot fluidized catalyst particles;

(b) passing catalyst particles upward by fluidization from the combustion zone into a second zone located above the combustion zone, and collecting a dense phase bed of hot catalyst particles in a particle collection section located at the bottom of said second zone;

(c) transferring a stream of catalyst particles downward from said particle collection section through a particle flow control means and a vertically orientated first particle transfer conduit into an upper end of a backmixed particle cooling chamber;

(d) admixing said stream of catalyst particles into a backmixed dense phase particle bed located in a lower portion of the particle cooling chamber;

(e) fluidizing said dense phase fluidized particle bed located in the particle cooling chamber in a controlled manner by the upward passage of a controlled flow of a second stream of oxygen-containing combustion gas;

(f) cooling particles present in the backmixed dense phase fluidized particle bed located in the particle cooling chamber through the use of a heat exchanger entirely present in the lower portion of the particle cooling chamber;

(g) discharging the second stream of combustion gas and catalyst particles from the cooling chamber into the combustion zone through a second particle transfer conduit communicating with the cooling chamber at a point above the heat exchanger, and

(h) reducing or terminating the flow of the second stream of combustion gas and the admixture of said stream of particles into the dense phase particle bed located in the lower portion of the cooling chamber to thereby:

(i) reduce or terminate the fluidization of the particle bed located in the lower portion of the cooling chamber and catalyst cooling as desired for operation of the process and thereby substantially covering at least a portion of said heat exchanger with a stagnant bed of catalyst particles while:

(ii) still maintaining the downward flow of said stream of catalyst particles into the upper end of the cooling chamber and through said second particle transfer conduit into the combustion zone.

### SUMMARY OF THE INVENTION

The present invention provides a regenerator comprising a vessel having an outer wall for containing a bed of fluidized catalyst up to a specified level (L) in a fluidized bed zone, and comprising catalyst inlet means, catalyst outlet means, gas inlet means, gas outlet means, perforated support means for the fluidized bed, a catalyst cooling zone comprising heat exchange means such as a tubular cooling coil for containing a catalyst-coolant fluid such as $H_2O$, and means operable to cause catalyst from the fluidized bed to pass in contact with the heat exchange means, characterised in that the catalyst cooling zone is within the regenerator vessel and is bounded at its base by a non-perforated catalyst support means and at its side by an upright partition which extends across the interior of the vessel, the bottom of the partition being spaced above the non-perforated catalyst support means and the top of the partition being below the specified catalyst level (L), a baffle attached to the non-perforated catalyst support means outside the catalyst cooling zone and extending across the interior of the vessel to define with the partition a space serving as a flow path for catalyst to pass out of the cooling zone into the fluidized bed, said baffle extending upwardly to a height intermediate the heights of the bottom and top of the partition, means for introducing a first fluidizing gas into the fluidizing bed from the gas inlet means, means for introducing a second fluidizing gas into the cooling zone, means for introducing a third fluidizing gas into the space between the partition and the baffle, and control means for regulating the rate of introduction of the third fluidizing gas into the space between the partition and the baffle.

The catalyst support means may be a horizontal plate having a diameter ranging from 15 feet (4.572 m) to 55 feet (16.764 m) and wherein the bottom of said partition may be spaced from 9 inches (22.62 cm) to 18 inches (45.72 cm) above said horizontal plate.

The baffle may have a height sufficient to overlap said partition by about 2 feet (60.96 cm).

The horizontal distance between said baffle and said partition may be between 6 inches (15.24 cm) and 12 inches (30.48 cm).

In another aspect, the invention provides a method for removing heat from a bed of fluidized catalyst particles undergoing regeneration in a regenerator of a fluid catalytic cracking conversion unit wherein excess heat is liberated by combustion of carbonaceous deposits from the catalyst with an oxygen-containing gas, wherein the regenerator is as described here and the method comprises the steps of: maintaining a bed of particles having a relatively lower density in a regeneration zone of said regenerator than in the cooling zone by passing second fluidizing gas into the cooling zone at a suitable rate; and causing catalyst particles to circulate from said denser bed cooling zone to said lower density bed regeneration zone by passing third fluidizing gas into the space between the partition and the baffle.

The higher density bed may have a density ranging from 25 to 40 pounds per cubic foot (440.47 to 640.75 $kg.m^{-3}$). The lower density bed may have a density ranging from 15 to 25 pounds per cubic foot (240.28 to 400.47 $kg.m^{-3}$).

The regeneration conditions may include a temperature ranging from 1200 ° F (648.9 ° C) to 1400 ° F (760 ° C).

## BRIEF DESCRIPTION OF THE DRAWINGS

Figure 1 is a schematic plan of an apparatus in sectional elevation view illustrating one embodiment of the invention.

Figure 2 is a cross-sectional view of the apparatus of Figure 1 taken along plane I-I′.

## DESCRIPTION OF THE PREFERRED EMBODIMENT

The preferred embodiment will be described with reference to the accompanying drawings and is applied to regeneration of spent cracking catalysts for simplicity of description but it should be understood that the apparatus and process are equally applicable to treatment of other fluidized solids in which heat is generated in the fluid bed and in which it is desired to control the heat produced in the fluid bed.

Referring to Figure 1, a regenerator 10 contains a bed 12 having a level L of fluidized catalyst particles having carbonaceous deposits thereon which are undergoing regeneration by combustion of the carbonaceous deposits with an oxygen-containing gas such as air introduced by line 14. A sufficient amount of oxygen-containing gas is introduced into the regenerator to maintain the catalyst particles fluidized and at the desired density. Spent catalyst is introduced to bed 12 by line 16 and regenerated catalyst is removed from the regenerator by line 17. Combustion gas evolved from the regeneration and entrained catalyst particles pass through cyclones 18 and 20 where the entrained particles are removed and returned to the regeneration bed via cyclone diplegs, while the combustion gases are removed from the regenerator by line 22. Fluidized regeneration bed 12 for regeneration of cracking catalyst is generally maintained at a temperature ranging from 1200° to 1400°F (648.9 to 760°C). Catalyst supporting means, such as plate 24, is disposed in the bottom portion of regenerator 10 to support the bed of catalyst. Plate 24 has orifices or perforations in at least a portion of it to permit the oxygen-containing gas to pass into the regeneration zone (12) to contact the spent catalyst particles. A baffle 26 is attached to plate 24 and projects vertically upwardly. At a spaced distance from the baffle, for example, at a distance ranging from 6 to 12 inches (15.24 to 30.48 cm) when the regenerator has a diameter ranging from 15 to 55 feet (4.572 to 16.764 m), is disposed a partition 28 such as a plate having its lower end at a spaced distance from plate 24, for example, at a distance ranging from 9 to 18 inches (22.86 to 45.72 cm), and an upper end that terminates below the expected upper level L of the fluidized bed when the process is in operation. For example, baffle 26 may have a height sufficient to overlap partition 28 by about 2 feet (60.96 cm). The portion of supporting means, i.e., plate 24, that extends horizontally from baffle 26 to the inner wall A of regenerator 10 does not have orifices. This portion of the catalyst supporting means could be a separate plate that extends along the same horizontal axis as perforated plate 24. A tubular coil 30 is disposed in the space between partition 28 and inner wall A in a fluidized bed of catalyst. The space formed by the partition and inner wall A will hereinafter be designated as the cooling zone. Water is introduced into coil 30 by line 32 and water and steam are removed from the coil by line 34. Aeration steam is introduced by line 36 to a mattress 38 disposed in the bottom of the space formed by partition 28 and inner wall A to maintain the catalyst particles fluidized in the cooling zone. The aeration steam is introduced in an amount such that the bed of catalyst particles in the zone between partition 28 and wall A have a higher density than the density of the fluidized bed of particles in regeneration zone 12. Suitable densities of the catalyst bed in the cooling zone and the catalyst bed in the regeneration zone are shown in Table I. A portion of the aeration steam of line 36 is passed by line 40 to a steam sparger 27 in regenerator 10 that extends the length of the baffle 26. A valve 42 disposed in line 40 regulates the steam flow through the sparger 27. When valve 42 is closed, the catalyst between the baffle and the partition is not fluidized and forms a seal. However, aeration steam flows through the holes in the mattress and maintains the catalyst around coil 30. Although the partition does not extend to the top of the bed, catalyst does not flow from the regeneration bed over the tubular coil because the outlet space or gap between the partition 28 and the baffle 26 is closed by defluidized catalyst. When valve 42 is opened, the catalyst from the cooling zone, which has a higher density than the catalyst in the regeneration zone, flows from behind the partition and over the baffle into the regeneration zone. Hot catalyst then flows over the top of the partition into the cooling zone. The circulation continues as long as valve 42 is open to remove the desired amount of heat from the regeneration zone. Figure 2 is a cross-sectional view through section I-I′ of the apparatus with the same numbered items having the same meaning. Suitable operating conditions for the heat removal method of the present invention are summarized in Table I.

TABLE I

| Conditions | Broad Range | Specific Example |
|---|---|---|
| Density of bed in cooling zone of regenerator, (lbs./cubic foot) kg.m$^{-3}$ | (25-40) 400.47-640.75 | (33) 528.62 |
| Density of Bed in regenerator zone of regenerator, (lbs./ cubic foot) kg.m$^{-3}$ | (15-25) 240.30-400.47 | (17) 272.32 |
| Regenerator temp., (°F) °C | (1200-1400) 648.9-760.0 | (1320) 715.6°C |
| Aeration steam rate to cooling zone, (lbs./hr./sq.ft.) kg/h/m$^2$ | (30-100) 146.48-488.27 | (50) 244.13 |
| Regeneration gas rate to regeneration zone, (lbs./hr./sq.ft.) kg/h/m$^2$ | (200-600) 976.53-2929.60 | (450) 2197.20 |
| Water inlet rate to tubular coil, lbs./hr. for typical 50-100 MBTU/hr. heat removal | | |
| Fluidizing gas to zone between baffle and partition, (lbs./hr./sq.ft.) kg/h/m$^2$ | (100-200) 488.27-976.53 | (150) 732.40 |

In this patent specification, the following conversions of units are employed:

- Temperatures in °F are converted to equivalent °C by subtracting 32 and then dividing by 1.8.
- Lengths in inches (") and feet (') are converted to equivalent m by multiplying by 0.0254 and 0.3048 respectively.
- Area in square feet (sq.ft.) is converted to m$^2$ by multiplying by 0.0929.

- Mass in pounds (lbs) is converted to kg by multiplying by 0.4536.
- Volume in cubic feet is converted to $m^3$ by multiplying by 0.028317.
- Amount of heat in BTU is converted to kJ by multiplying by 1.055.

## Claims

1. A regenerator (10) comprising a vessel having an outer wall for containing a bed (12) of fluidized catalyst up to a specified level (L) in a fluidized bed zone, and comprising catalyst inlet means (16), catalyst outlet means (17), gas inlet means (14), gas outlet means (22), perforated support means (24) for the fluidized bed (12), a catalyst cooling zone comprising heat exchange means (30) such as a tubular cooling coil for containing a catalyst-coolant fluid such as $H_2O$, and means operable to cause catalyst from the fluidized bed (12) to pass in contact with the heat exchange means (30), characterised in that the catalyst cooling zone is within the regenerator vessel and is bounded at its base by a non-perforated catalyst support means and at its side by an upright partition (28) which extends across the interior of the vessel, the bottom of the partition (28) being spaced above the non-perforated catalyst support means and the top of the partition (28) being below the specified catalyst level (L), a baffle (26) attached to the non-perforated catalyst support means outside the catalyst cooling zone and extending across the interior of the vessel to define with the partition (28) a space serving as a flow path for catalyst to pass out of the cooling zone into the fluidized bed, said baffle (26) extending upwardly to a height intermediate the heights of the bottom and top of the partition (28), means (24) for introducing a first fluidizing gas into the fluidizing bed from the gas inlet means (14), means (38) for introducing a second fluidizing gas into the cooling zone, means (27) for introducing a third fluidzing gas into the space between the partition (28) and the baffle (26), and control means for regulating the rate of introduction of the third fluidizing gas into the space between the partition and the baffle.

2. The apparatus of claim 1 wherein said catalyst support means (24) is a horizontal plate having a diameter ranging from 15 feet (4.572 m) to 55 feet (16.764 m) and wherein the bottom of said partition is spaced from 9 inches (22.62 cm) to 18 inches (45.72 cm) above said horizontal plate.

3. The apparatus of claim 1 or claim 2 wherein said baffle has a height sufficient to overlap said partition by about 2 feet (60.96 cm).

4. The apparatus of any one of claims 1 to 3 wherein the horizontal distance between said baffle and said partition is between 6 inches (15.24 cm) and 12 inches (30.48 cm).

5. A method for removing heat from a bed (12) of fluidized catalyst particles undergoing regeneration in a regenerator (10) of a fluid catalytic cracking conversion unit wherein excess heat is liberated by combustion of carbonaceous deposits from the catalyst with an oxygen-containing gas, wherein the regenerator is in accordance with any one of claims 1 to 4 and the method comprises the steps of: maintaining a bed of particles having a relatively lower density in a regeneration zone of said regenerator than in the cooling zone by passing second fluidizing gas into the cooling zone at a suitable rate; and causing catalyst particles to circulate from said denser bed cooling zone to said lower density bed regeneration zone by passing third fluidizing gas into the space between the partition (28) and the baffle (26).

6. The method of claim 5 wherein said higher density bed has a density ranging from 25 to 40 pounds per cubic foot (440.47 to 640.75 $kg.m^{-3}$).

7. The method of claim 5 or claim 6 wherein said lower density bed has a density ranging from 15 to 25 pounds per cubic foot (240.28 to 400.47 $kg.m^{-3}$).

8. The method of any one of claims 5 to 7 wherein said regeneration conditions include a temperature ranging from 1200°F (648.9°C) to 1400°F (760°C).

## Revendications

1. Régénérateur (10) comprenant un récipient ayant une paroi externe pour contenir un lit (12) de catalyseur fluidisé jusqu'à un niveau spécifié (L) dans une zone de lit fluidisé, et comprenant un organe d'entrée de catalyseur (16), un organe de sortie de catalyseur (17), un organe d'entrée de gaz (14), un organe de sortie de gaz (22), un organe support perforé (24) pour le lit fluidisé (12), une zone de refroidissement de catalyseur comprenant un organe d'échange de chaleur (30) tel qu'un serpentin de refroidissement tubulaire pour contenir un fluide réfrigérant de catalyseur comme $H_2O$, et un organe que l'on peut faire fonctionner pour faire passer le catalyseur provenant du lit fluidisé (12) en contact avec l'organe d'échange de chaleur (30), caractérisé en ce que la zone de refroidissement du catalyseur est à l'intérieur du récipient régénérateur et est limitée à sa base par un organe de support de catalyseur non perforé et sur son côté par une paroi verticale (28) qui s'étend à travers l'intérieur du récipient, le fond de la paroi (28) étant espacé au-dessus de l'organe de support de catalyseur non perforé et le sommet de la paroi (28) étant en-dessous du niveau de catalyseur spécifié (L), une chicane (26) attachée à l'organe de support de catalyseur non perforé à l'extérieur de la zone de refroidissement du catalyseur et s'étendant à travers l'intérieur du récipient pour définir avec la paroi (28) un espace servant de voie d'écoulement pour la sortie du catalyseur hors de la zone de refroidissement dans le lit fluidisé, ladite chicane (26) s'étendant vers le haut jusqu'à une hauteur intermédiaire entre les hauteurs du bas et du sommet de la paroi (28), un organe (24) pour introduire un premier gaz fluidisant dans le lit fluidisant à partir de l'organe d'entrée de gaz (14), un organe (38) pour introduire un second gaz fluidisant dans la zone de refroidissement, un organe (27) pour introduire un troisième gaz fluidisant dans l'espace compris entre la paroi (28) et la chicane (26), et un organe de commande pour régler la vitesse d'introduction du troisième gaz fluidisant dans l'espace compris entre la paroi et la chicane.

2. Appareil de la revendication 1 dans lequel ledit organe support de catalyseur (24) est une plaque horizontale ayant un diamètre allant de 4,572 m à 16,764 m et où le fond de ladite paroi est espacé de 22,86 cm à 45,72 cm au-dessus de ladite plaque horizontale.

3. Appareil de la revendication 1 ou de la revendication 2 dans lequel ladite chicane a une hauteur suffisante pour recouvrir ladite paroi d'environ 60,96 cm.

4. Appareil de l'une quelconque des revendications 1 à 3 dans lequel la distance horizontale entre ladite chicane et ladite paroi est comprise entre 15,24 cm et 30,48 cm.

5. Procédé pour éliminer la chaleur d'un lit (12) de particules de catalyseur fluidisé subissant une régénération dans un régénérateur (10) d'une unité de transformation par craquage catalytique en lit fluide dans lequel l'excès de chaleur est libéré par combustion de dépôts carbonés provenant du catalyseur avec un gaz contenant de l'oxygène, où le régénérateur est en accord avec l'une quelconque des revendications 1 à 4 et le procédé comprend les étapes de: maintien d'un lit de particules ayant une densité relativement plus faible dans une zone de régénération dudit régénérateur que dans la zone de refroidissement par passage d'un second gaz fluidisant dans la zone de refroidissement à une vitesse appropriée; et création d'une circulation des particules de catalyseur depuis ladite zone de refroidissement à lit plus dense vers ladite zone de régénération à lit de densité plus faible par passage d'un troisième gaz fluidisant dans l'espace compris entre la paroi (28) et la chicane (26).

6. Procédé de la revendication 5 dans lequel ledit lit de densité plus élevée a une densité allant de 400,47 à 640,75 $kg.m^{-3}$.

7. Procédé de la revendication 5 ou de la revendication 6 dans lequel ledit lit de plus faible densité a une densité allant de 240,28 à 400,47 $kg.m^{-3}$.

8. Procédé de l'une quelconque des revendications 5 à 7 dans lequel lesdites conditions de régénération comprennent une température allant de 648,9 °C à 760 °C.

**Patentansprüche**

1. Regenerator (10), der einen Kessel mit einer äußeren Wand zur Aufnahme eines Bettes (12) aus Wirbelbettkatalysator in einer Wirbelbettzone bis zu einem spezifizierten Niveau (L), Katalysatoreinlaßmittel (16), Katalysatorauslaßmittel (17), Gaseinlaßmittel (14), Gasauslaßmittel (22), perforierte Stützmittel (24) für das Wirbelbett (12), eine Katalysatorkühlzone, die Wärmeaustauschmittel (30) wie röhrenförmige Kühlschlangen zur Aufnahme eines Katalysatorkühlmittels wie Wasser umfaßt, und Mittel umfaßt, die betätigt werden können, um den Katalysator aus dem Wirbelbett (12) dazu zu bringen, die Wärmeaustauschmittel (30) in Kontakt mit ihnen zu passieren, dadurch gekennzeichnet, daß die Katalysatorkühlzone innerhalb des Regeneratorkessels liegt und an ihrer Basis durch ein nichtperforiertes Katalysatorstützmittel und an ihrer Seite durch eine aufrechte Trennwand (28), welche sich durch das Innere des Kessels erstreckt, begrenzt ist, wobei das untere Ende der Trennwand (28) mit Abstand über dem nichtperforierten Katalysatorstützmittel angeordnet ist und das obere Ende der Trennwand (28) unterhalb des spezifizierten Katalysatorniveaus (L) liegt, ein Trennblech (26), das an dem nichtperforierten Katalysatorstützmittel außerhalb der Katalysatorkühlzone befestigt ist und sich durch das Innere des Kessels erstreckt, um mit der Trennwand (28) einen Raum zu bilden, der als Fließweg für den aus der Kühlzone in das Wirbelbett zu führenden Katalysator dient, wobei sich das Trennblech (26) aufwärts bis zu einer Höhe zwischen den Höhen des unteren und des oberen Endes der Trennwand (28) erstreckt, Mittel (24) zur Einführung eines ersten aufwirbelnden Gases aus den Gaseinlaßmitteln (14) in das Wirbelbett, Mittel (38) zur Einführung eines zweiten aufwirbelnden Gases in die Kühlzone, Mittel (27) zur Einführung eines dritten aufwirbelnden Gases in den Raum zwischen der Trennwand (28) und dem Trennblech (26) und Kontrollmittel zur Regulierung der Zuführungsgeschwindigkeit des dritten aufwirbelnden Gases in den Raum zwischen der Trennwand und dem Trennblech vorhanden sind.

**2.** Vorrichtung nach Anspruch 1, bei der das Katalysatorstützmittel (24) eine horizontale Platte mit einem Durchmesser im Bereich von 4,572 m (15 Fuß) bis 16,764 m (55 Fuß) ist und das untere Ende der Trennwand mit einem Abstand von 22,62 cm (9 Inch) bis 45,72 cm (18 Inch) über der horizontalen Platte angeordnet ist.

**3.** Vorrichtung nach Anspruch 1 oder Anspruch 2, bei dem das Trennblech eine Höhe hat, die ausreicht, um die Trennwand etwa 60,96 cm (2 Fuß) zu überlappen.

**4.** Vorrichtung nach einem der Ansprüche 1 bis 3, bei der der horizontale Abstand zwischen dem Trennblech und der Trennwand 15,24 cm (6 Inch) bis 30,48 cm (12 Inch) beträgt.

**5.** Verfahren zur Abführung von Wärme aus einem Bett (12) von Wirbelbettkatalysatorteilchen, die in einem Regenerator (10) einer Anlage zur Umwandlung durch katalytisches Kracken im Wirbelbett regeneriert werden, bei dem überschüssige Wärme durch Verbrennung von kohlenstoffhaltigen Ablagerungen von dem Katalysator mit einem Sauerstoff enthaltenen Gas freigesetzt wird, wobei der Regenerator ein Regenerator gemäß einem der Ansprüche 1 bis 4 ist, und bei dem: in einer Regenerationszone des Regenerators ein Bett von Teilchen mit einer relativ niedrigeren Dichte als dasjenige in einer Kühlzone gehalten wird, indem ein zweites aufwirbelndes Gas mit einer geeigneten Geschwindigkeit in die Kühlzone geführt wird, und die Katalysatorteilchen dazu gebracht werden, aus der Kühlzone mit dem dichterem Bett in die Regenerationszone mit dem weniger dichten Bett zu zirkulieren, indem ein drittes aufwirbelndes Gas in den Raum zwischen der Trennwand (28) und dem Trennblech (26) geführt wird.

**6.** Verfahren nach Anspruch 5, bei dem das Bett mit der höheren Dichte eine Dichte im Bereich von 440,47 bis 640,75 $kg/m^3$ (25 bis 40 pounds per cubic foot) aufweist.

**7.** Verfahren nach Anspruch 5 oder Anspruch 6, bei dem das Bett mit niedriger Dichte eine Dichte im Bereich von 240,28 bis 400,47 $kg/m^3$ (15 bis 25 pounds per cubic foot) aufweist.

**8.** Verfahren nach einem der Ansprüche 5 bis 7, bei dem die Regenerationsbedingungen eine Temperatur im Bereich von 648,9 °C (1200 ° F) bis 760 °C (1400 ° F) einschließen.

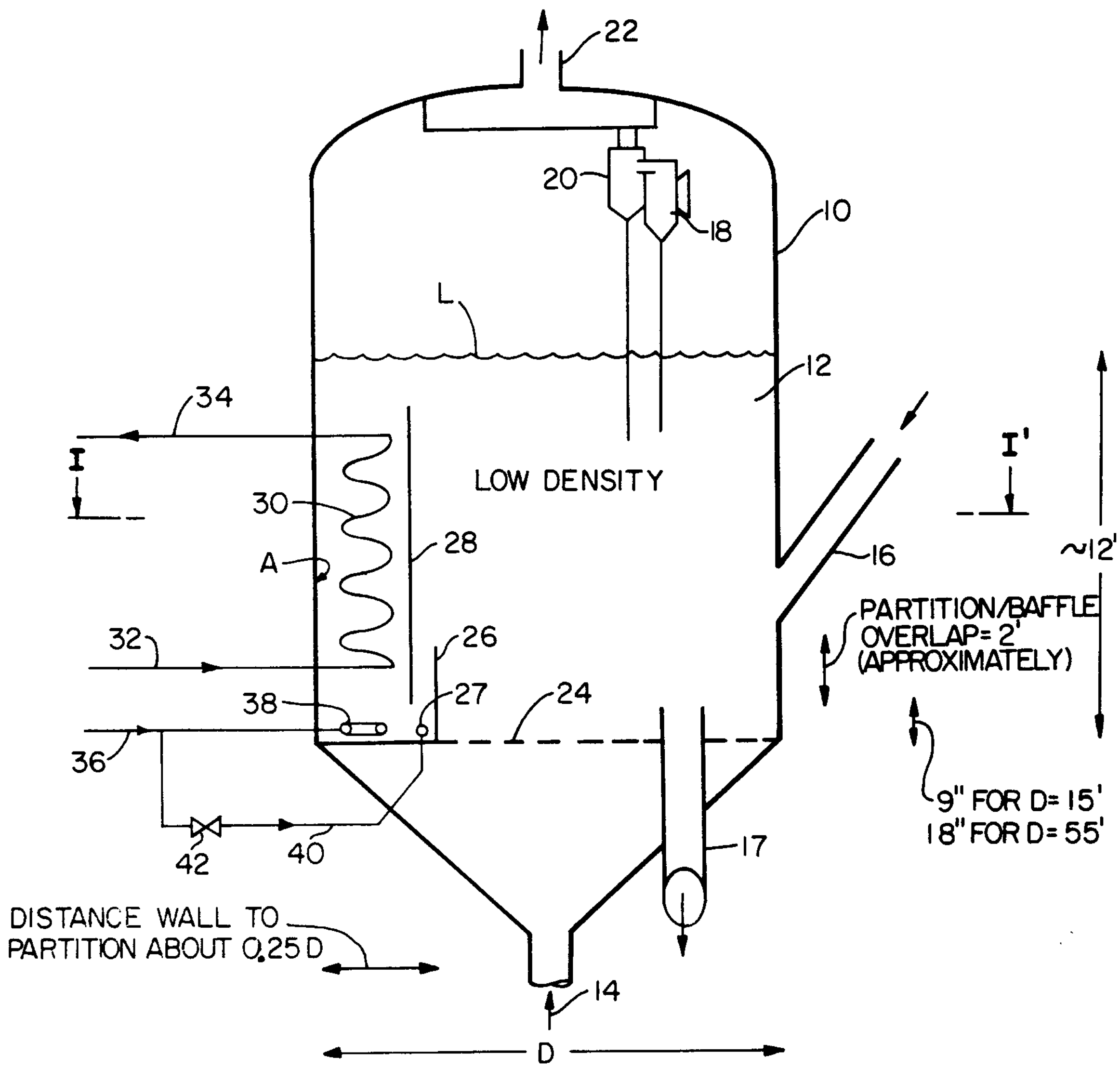
22
20
18
10
L
12
34
I
30
A
28
LOW DENSITY
I'
16
~12'
32
26
PARTITION/BAFFLE
OVERLAP= 2'
(APPROXIMATELY)
38
27
24
36
9" FOR D= 15'
18" FOR D= 55'
42
40
17
DISTANCE WALL TO
PARTITION ABOUT 0.25 D
14
D

FIG. 1

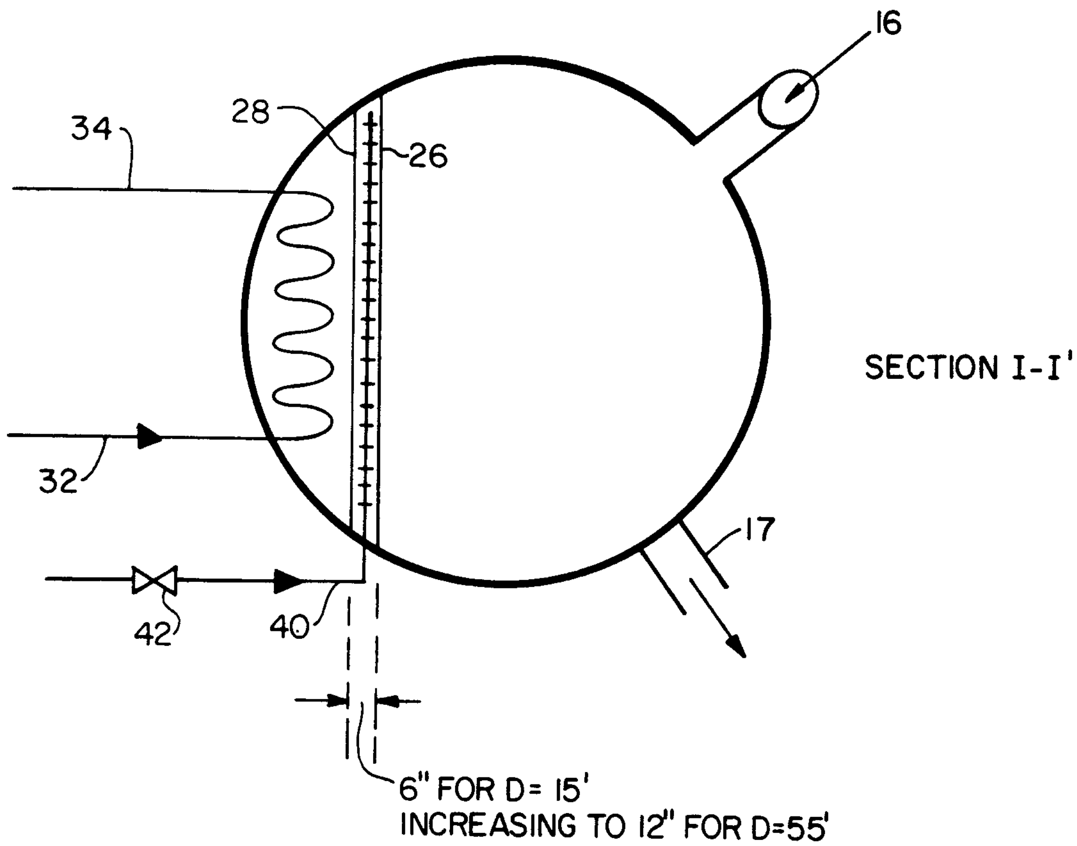
16
34
28
26
SECTION I-I'
32
17
42
40
6" FOR D= 15'
INCREASING TO 12" FOR D=55'

FIG. 2